# EUROPEAN PATENT SPECIFICATION

(11) **EP 1 225 207 B1**
(45) Date of publication and mention of the grant of the patent: **26.03.2008**
(21) Application number: 02000956.9
(22) Date of filing: 16.01.2002
(51) Int. Cl.: C09D 11/00

(54) **Process for preparation of pigmented ink jet inks**
Verfahren zur Herstellung von pigmentierten Tintenstrahldrucktinten
Procédé de préparation d'encres pigmentées pour impression par jet d'encre

(30) Priority: 23.01.2001 GB 0102222
(43) Date of publication of application: 24.07.2002
(73) Proprietor: ILFORD Imaging Switzerland GmbH, 1723 Marly 1 (CH)
(72) Inventor: Rose, Peter Edward, Winsford, Cheshire, CW7 3EA (GB); Walker, Nicholas Alexander, Holmes Chapel, Cheshire, CW4 8LS (GB)

(56) References cited:
- EP-A- 0 518 225
- EP-A- 0 915 137
- WO-A-00/17250
- WO-A-90/04005
- WO-A-98/51749
- DE-A- 19 536 845

## Description

### Field of the Invention

This invention relates to an improved process for the preparation of pigmented ink jet inks. More particularly, this invention relates to a process for the rapid preparation of ultrafine particle size pigmented ink jet inks.

### Background of the Invention

The ink jet process is now a widely used printing process since it can be carried out using relatively cheap and simple printers without noise and with high quality, in particular in the case of colour printing. There are several kinds of ink jet printers, for example piezoelectric and thermal drop on demand printers and continuous ink jet printers. In the ink jet process, droplets of a recording fluid, the ink, are applied to the recording material such as paper or transparent film under computer control.

Ink jet printers, particularly those for use in the home or office, generally use aqueous inks, and such inks commonly employ dyes as colorants. Several suitable water soluble dyes which have been perfected for ink jet use are known, but there are some deficiencies to the use of these dyes. For instance, dyes tend to wick and bleed into uncoated and rough papers, and as they remain soluble in water on the printed page are also subject to print deficiencies such as leaching by water, for example rain water and coffee. This deters use of ink jet printers in certain applications. Moreover, many of the dyes in use have poor light fastness and fade even on exposure to the fluorescent lighting used in offices. There is thus considerable interest in the use of pigmented inks for ink jet printing. The term pigment describes a colorant which is substantially insoluble in the aqueous ink medium. It is expected that prints produced using pigmented inks will display improved fastness to washing and weathering and better light stability.

The process of preparing inks from pigments commonly involves two steps: (a) a milling or dispersing step to break up the pigment to the primary particles, and (b) a dilution step in which the dispersed pigment concentrate is diluted or let down with a carrier and other addenda to a working strength ink. In the milling step, the pigment is usually suspended in a carrier (typically water or the same carrier as that in the finished ink) along with rigid, inert milling media. Mechanical energy is supplied to this pigment suspension, and the collisions between the milling media and the pigment cause the pigment to deaggregate into its primary particles. The milling step may be accomplished by many well known methods, for example in a roller mill as described in United States Patent 5,310,778, a high speed mill as described in United States Patent 5,679,138, a horizontal mini mill, an air jet mill, a ball mill, a sand mill, or an attritor. Furthermore United States Patent 6,053,438 discloses a method for achieving the fine particle sizes required for pigmented ink jet inks by milling using a polymeric resin milling medium having substantially spherical particles < 100 µm in size, but it can be difficult to separate such small media from the dispersion.

As an alternative to milling, it is known according to United States Patents 5,026,427 and 5,720,802 to disperse the pigment by passing the suspension of the pigment in the carrier through a plurality of nozzles within a liquid jet interaction chamber at a liquid pressure of at least 6.89 Mpa (1000 psi). Similarly United States Patent 5,976,232 discloses a homogenisation process for the preparation of pigmented ink jet inks.

European Patent Application EP 0 915 137 A discloses a pigment preparation comprising at least one pigment from the group of carbides, nitrides, borides, and silicides of the elements Ti, Zr, Hf, Si, Ge, and Sn; and water. It also discloses a process for making this preparation by milling partially in a mill and partially in a high-pressure homogeniser. However this method is only described for use with the listed pigments.

Also, German Patent Offenlegungsschrift DE 195 36 845 A discloses a process and apparatus for producing finely divided dispersions, but does not disclose use of this process and apparatus with any specific organic pigments.

A dispersant or stabiliser, or both, is commonly present during the milling stage to facilitate the wetting and de-aggregation of the raw pigment, to maintain colloidal particle stability, and to retard particle re-agglomeration and settling. It is also important to have dispersants or stabilisers in the ink which serve to keep the pigment particles from agglomerating and settling out of the carrier or clogging the orifice of the printing system.

However it is difficult to prepare pigment dispersions by standard milling processes which have sufficiently small particle size and sufficient stability for general ink jet use, particularly with certain high performance pigments which are difficult to disperse. This means that lengthy milling or dispersion stages are necessary, and it is also common to finish the pigment dispersion by filtration or centrifugation to remove oversize particles which have not been sufficiently reduced in size. Thus such conventional methods used to prepare pigmented ink jet inks tend to be very time consuming, increase the expense, and decrease the yield and throughput of the equipment. Consequently there is still a need for a process which enables the quick preparation of a pigmented ink jet ink wherein the particles are sufficiently fine that the ink is stable and does not re-agglomerate during storage or jetting to clog the nozzles of the ink jet printing system.

### Summary of the Invention

According to this invention there is provided a process for the rapid preparation of ultrafine particle size pigmented ink jet inks comprising the steps of:-
(A) Providing a milling formulation comprising at least one pigment selected from C.I. Pigment Black 1; C.I. Pigment Yellow 1, 3, 12, 13, 14, 17, 24, 34, 35, 37, 53, 55, 74, 81, 83, 93, 95, 97, 98, 100, 101, 104, 108, 109, 110, 117, 128, 138, 151, 153, 154, 155, and 180; C.I. Pigment Orange 5, 13, 16, 17, 36, 43, and 71; C.I. Pigment Red 1, 2, 3, 9, 17, 22, 23, 31, 38, 48:1, 48:2, 48:3, 48:4, 49:1, 52:2, 53:1, 57:1, 60:1, 63:1, 63:2, 64:1, 81, 83, 88, 104, 105, 106, 112, 114, 122, 123, 146, 149, 166, 168, 170, 172, 177, 178, 179, 184, 188, 190, 193, 202, 209, and 219; C.I. Pigment Violet 1, 3, 5:1, 16, 19, 23, and 38; C.I. Pigment Blue 1, 2, 15:1, 15:2, 15:3, 15:4, 15:6, 16, 17:1, 56, 60, and 63; and C.I. Pigment Green 1, 4, 7, 8, 10, 17, 18, and 36; at least one dispersant, and an aqueous liquid carrier;
(B) milling this formulation in a bead mill or a triple roll mill in the presence of a milling medium; then
(C) separating the milling medium; then
(D) dispersing the mixture by passing it through a high pressure liquid homogeniser at a liquid pressure of at least 6.89 MPa (1000 psi);
(E) diluting the mixture from step (D) to obtain an ink jet ink having a pigment concentration suitable for ink jet printers.

### Detailed Description of the Invention

The milling formulation may be provided in the form of a slurry prepared by simply mixing the components with stirring. Good stirring is preferable in order to obtain good wetting of the pigment.

The exact choice of pigment will depend upon the specific colour reproduction and image stability requirements of the printer and application. It is also possible to mix more than one pigment in the inks of the invention.
Preferable pigments include Pigment Blue 15:3 or 15:4, Pigment Red 122, Pigment Yellow 74, 128, 151, or 155, Pigment Black 7, Pigment Green 7 or 36, and Pigment Orange 43 or 71. The pigment may be present in the milling formulation at 1 % to 50 % by weight, preferably between about 20 % and about 40 % by weight excluding the milling media.

The selected pigment may be used in the form of a dry powder. However pigments are often supplied commercially in the form of a concentrated aqueous pigment dispersion, and this invention is also useful for pigments supplied as such dispersions, which commonly include dispersants and other cosolvents as well as water. Alternatively the pigment may be supplied in the form of a water wet presscake. In presscake form, the pigment is not aggregated to the extent that it is in dry form and thus the pigment does not require as much deaggregation in the process of preparing the inks from dry pigments. It is also possible to use processed pigments such as self dispersing carbon black or graft carbon black having a surface treated with a resin or the like.

The dispersant in the milling formulation may be any of the dispersants for pigmented ink jet inks known in the art. Selection of a suitable dispersant or combination of dispersants will depend upon the pigment, the dispersant medium and how the dispersant or combination affects the surface tension and viscosity of the dispersion and of the resulting ink. It will also depend on the printing properties of the ink. Suitable dispersants for this invention include macromolecular polyionic dispersants, for example copolymers of styrene with acrylic, methacrylic, or maleic acids; various types of poly(ethylene oxide) condensates and sulphate or phosphate esters thereof; and surfactants such as sarcosinate compounds. A preferred dispersant for the invention is a copolymer of styrene with acrylic, methacrylic, or maleic acids, together with optionally additional vinylically unsaturated comonomers such as acrylate esters. Preferably the dispersant is characterised by an acid number of between about 150 and about 250, a glass transition temperature between about 70° C and about 100° C, and a molecular weight of between about 2000 and about 20000. Most preferably the dispersant is a styrene acrylate copolymer characterised by an acid number between 150 and 200 and a molecular weight between about 5000 and about 10000. Many suitable styrene acrylate dispersants are commercially available.

Such styrene acrylate copolymer dispersants are either supplied commercially in the form of concentrated solutions in aqueous base, or are supplied as solids which are to be dissolved in water in the presence of a base. Suitable bases for neutralising such dispersants include sodium or potassium hydroxide, ammonia, or an organic amine base such as ethanolamine, triethanolamine, 2-amino-2-methyl-1-propanol, or 1-(dimethylamino)-2-propanol. It is also possible to use mixtures of such bases to neutralise the styrene acrylate copolymer.

The aqueous liquid carrier for the milling formulation may be water or a mixture of water with at least one water soluble organic cosolvent. Suitable organic cosolvents include any of those known for use in aqueous ink jet inks. The liquid carrier may also comprise other additives required in the ink. Preferably the liquid carrier is water.

The preferred proportions of the pigment, the liquid carrier, and the dispersant in the milling formulation can vary within wide limits and depend, for example, upon the particular components selected, the mill to be used, and the size and density of the milling media, etc. Preferably the milling formulation contains at least 10 % up to 60 % by weight of pigment based on the total weight of the mixture, and most preferably between about 20 % and about 40 % of pigment by weight. Relative to the pigment, the milling formulation may contain up to 400 % of the dispersant by weight, but preferably between about 10 % and about 100 % by weight on the pigment, and most preferably approximately 20 % to 50 % by weight on the pigment, depending on the pigment used and any other components, and also on the properties desired of the ink.

The milling step (B) of the invention can take place in any suitable bead mill or triple roll mill. Such equipment is readily available commercially.

The milling time may vary widely and depends upon the pigment, milling medium, milling apparatus and residence conditions selected, and the initial and desired final particle size, etc. For the preferred pigments, dispersants, and milling media described above, milling times may be up to 100 hours, typically up to about 5 hours, and preferably up to about 1 hour. The process may be carried out in a continuous or batch mode.

The milling medium may be any of the milling media known in the art, such as glasses, ceramics, metals, and plastics. In a preferred embodiment, the milling medium comprises ceramic beads, and in a particularly preferred embodiment the ceramic beads comprise Yttrium stabilised Zirconia beads of diameter between about 0.1 mm and about 1.0 mm, hereinafter referred to as YTZ beads.

The separation step (C) is preferably a simple sieving or filtration. Most preferably this separation is carried out *in situ* in the milling apparatus. Commercial milling equipment normally has means of retaining the milling medium in the milling chamber. Optionally, additional liquid carrier may be added at this stage, both to increase the ease of separation and because the optimal pigment loading in the subsequent dispersion step (D) may be lower than the optimum in the preceding milling step (B). The additional liquid carrier is preferably water, but may be a mixture of water with at least one water soluble organic cosolvent, and may additionally comprise other additives required in the ink.

A high pressure liquid homogeniser useful in step (D) of the method of the invention includes an apparatus such as an impingement mill having a plurality of nozzles within a liquid jet interaction chamber. Such a mill operates by subjecting the dispersion to a pressure of as much as 240 MPa (35,000 psi) in a hydraulic pump which pushes the dispersion into a decompression chamber where the particles of the dispersion impinge on one another and on the walls of the chamber to comminute the particles. Apparatus of this type is described in United States Patent 4,533,254. A suitable apparatus is available under the trade name Microfluidizer manufactured by Microfluidics, Newton, Mass, USA. An alternative apparatus suitable for carrying out step (D) of the method of the invention is the high pressure homogeniser available under the trade name Emulsiflex from Avestin Inc, Ottawa, Canada.

The preferred pigment concentration for the dispersion stage (D) depends on the components and apparatus used, but for example is typically between about 5 % and 25 % by weight of pigment based on the total weight of the mixture, and most preferably between about 10 % and about 20 % of pigment by weight. Step (D) of the method of the invention may be carried out by a single passage of the formulation through the interaction chamber. Alternatively the formulation may be repeatedly recirculated through the interaction chamber for up to 1 hour, preferably for about 10 minutes.

The dilution step (E) is necessary because the pigment concentration during the dispersion step is in general greater than that required in the ink. This technique also permits preparation of a greater quantity of pigmented ink from the equipment. By dilution, the ink is adjusted to the desired properties such as viscosity, colour, hue, saturation density, and print area coverage for the particular application. Preferably the milling and dispersing steps are carried out with water as the liquid carrier, and the ink is then prepared by dilution with additional water, together with organic cosolvents and other optional additives. Deionised water is commonly used. Alternatively the organic cosolvents and other optional additives may be present in the original milling formulation or may be added at the separation step (C). Representative examples of water-soluble organic cosolvents that may be selected include
(1) alcohols, such as methyl alcohol, ethyl alcohol, n-propyl alcohol, isopropyl alcohol, n-butyl alcohol, sec-butyl alcohol, t-butyl alcohol, iso-butyl alcohol, neopentyl alcohol, benzyl alcohol, furfuryl alcohol, and tetrahydrofurfuryl alcohol:
(2) ketones or ketoalcohols such as acetone, methyl ethyl ketone and diacetone alcohol;
(3) ethers, such as tetrahydrofuran and dioxane;
(4) esters, such as ethyl lactate;
(5) polyhydric alcohols, such as ethylene glycol, diethylene glycol, triethylene glycol, tetraethylene glycol, polyethylene glycol, propylene glycol, dipropylene glycol, glycerol, 2-methyl-2,4-pentanediol, 1,5-pentanediol, 1,2-hexanediol, 1,2,6-hexanetriol, and 2-ethyl- 2-hydroxymethylpropane-1,3-diol;
(6) lower alkyl mono-or di-ethers derived from alkylene glycols, such as ethylene glycol monomethyl (or -ethyl) ether, diethylene glycol mono-methyl (or -ethyl) ether, propylene glycol mono-methyl (or -ethyl) ether, triethylene glycol mono-methyl (or - ethyl) ether and diethylene glycol di-methyl (or -ethyl) ether;
(7) sulphur-containing compounds such as tetramethylene sulphone, dimethyl sulphoxide, and thiodiglycol; and
(8) nitrogen containing organic compounds such as urea, thiourea, 1,3-dimethyl-2-imidazolidinone, pyrrolidone and N-methyl-2-pyrrolidone.

Selection of a suitable mixture of water and water soluble organic cosolvent depends on the requirements of the specific application, such as the desired surface tension and viscosity, the selected pigment, the drying time of the pigmented ink jet ink, and the type of substrate onto which the ink will be printed. A mixture of water and at least one water soluble organic solvent having at least two hydroxyl groups is preferred. Therefore preferred organic cosolvents include for example diethylene glycol, triethylene glycol, polyethylene glycol, thiodiglycol, glycerol, 1,2-hexanediol, 1,5-pentanediol, and mixtures comprising these solvents. The aqueous ink composition may contain up to 50 % of the organic cosolvent or mixture of organic cosolvents. Preferably the ink comprises up to about 10 % of each organic cosolvent, and most preferably between about 5 % and about 10 % of each of a mixture of at least two organic cosolvents.

The pigmented inks prepared according to the invention may also comprise other components which are advantageously added to aqueous ink jet inks, such as surfactants, viscosity modifiers, conductivity enhancing agents, defoamers, pH buffers, and biocides. In addition, sequestering agents such as EDTA may also be included to eliminate deleterious effects of heavy metal impurities. The pH of the ink may be controlled by the quantity of base added to the dispersant or by appropriate addition of acid or base to the final ink. The pH of the ink may be between about 5 and about 10, preferably between about 7 and about 8.5.

The final concentration of pigment particles in the ink jet ink may be up to about 30 %, but will generally be in the range of approximately 0.1 % to 10 %, preferably approximately 1 % to 5 %, by weight of the total ink composition for most ink jet printing applications. The average particle size in the ink should be 10 µm or less, preferably 1 µm or less, more preferably 200 nm or less, and most preferably about 150 nm or less. The surface tension should be in the range of about 20 mN/m (dynes/cm) to about 70 mN/m (dynes/cm), preferably in the range 30 mN/m (dynes/cm) to about 50 mN/m (dynes/cm). Acceptable viscosities are no greater than 20 mPas (centipoise), and preferably in the range of about 1 mPas (cP) to about 5 mPas (cP) at room temperature (25°C). It should be noted however that the process of the invention may be used to make inks having a wide range of viscosities and surface tensions.

In another embodiment of the present invention, there is provided a process of printing using the ink prepared by the process of the invention. The printing is effected by using the ink in an ink jet printer, and applying the ink to a printing medium which can be any of the substrates commonly used for ink jet printing, for example so-called plain paper, coated paper, wet strength paper, fine art paper, canvas, self-adhesive vinyl, scrim vinyl, overhead transparencies, fabrics, and synthetic media such as white polyester and bonded nonwoven polyolefin film-fibril sheets such as polyethylene or polypropylene banner materials.

Inks prepared by the process of the invention may be used with a variety of ink jet printers such as continuous, piezoelectric drop-on-demand and thermal or bubble jet drop-on-demand, and are particularly adapted for use in piezoelectric and thermal drop on demand printers. The printer may be a desk top printer or a wide format ink jet printer. The stability of the ink formulation allows long storage periods without any loss of printability.

The following examples will serve to illustrate the invention:

### Example 1

A milling formulation was prepared with the following components:

| **Component** | Quantity |
|---|---|
| Yellow pigment | 100 g |
| Dispersant | 20 g |
| Water to | 500 g |

The yellow pigment was a commercial sample of Pigment Yellow 155 available under the trade name Novoperm Yellow 4G from Clariant. The dispersant was a styrene/acrylate copolymer available under the trade name Joncryl 678 from SC Johnson which had been neutralised using potassium hydroxide. The pigment, dispersant, and water were mixed using a square-hole high shear disintegrator in a Silverson stirrer for 1 hour at 7000 rpm.

The milling chamber of an Eiger Torrance 'Mini' 250 Motormill MKII (Horizontal bead Mill) was charged with 180 ml of a YTZ milling medium composed of beads of diameter 0.8 mm to give a charge of 72 % by volume. The milling formulation was then passed through the mill and continuously processed for 5 hours at 5000 rpm. A sample was retained as dispersion A.

The beads were separated and the mixture diluted with water to a pigment concentration of 10 %. A 100 g sample was then passed through a Microfluidiser, Model M 110-F for 10 minutes at 90 MPa (13,000 psi). This is the inventive dispersion B.

A comparison dispersion was prepared using the same components in the following quantity:

| **Component** | Quantity |
|---|---|
| Yellow pigment | 50 g |
| Dispersant | 10 g |
| Water | 500 g |

The components were mixed using a square-hole high shear disintegrator in a Silverson stirrer for 1 hour at 7000 rpm. The mixture was then passed through a Microfluidiser, Model M 110-F for 1 hour at 90 MPa (13,000 psi). This dispersion was then centrifuged for 20 min at 3000 rpm to remove oversize particles. This is dispersion C.

The particle size of the dispersions was measured using a Polymer Laboratories LSP particle size analyser. The results are shown in Table 1.

**Table 1**

| **Dispersion** | Particle Size |
|---|---|
| Dispersion A comparative | 197 nm |
| Dispersion B invention | 159 nm |
| Dispersion C comparative | 178 nm |

The results show that the particle size of the inventive dispersion B prepared using both the milling and dispersing steps is smaller than that of the comparison dispersions A and C prepared using these steps individually, even though dispersion C had also had the largest particles removed by centrifugation.

### Example 2

A milling formulation was prepared with the following components:

| **Component** | Quantity |
|---|---|
| Magenta pigment | 150 g |
| Dispersant | 22.5 g |
| Water to | 500 g |

The magenta pigment was a commercial sample of Pigment Red 122 available under the trade name Hostaperm Pink E from Clariant. The dispersant was a styrene/acrylate copolymer available under the trade name Carboset 1161 from BF Goodrich. It was used as a solution which had been neutralised using potassium hydroxide. The milling medium was as in example 1. The pigment, dispersant, and water were mixed and milled exactly as in example 1. A sample was retained as dispersion D.

The beads were separated and the mixture diluted with water to a pigment concentration of 10 %. A 100 g sample was then passed through a Microfluidiser, Model M 110-F for 10 minutes at 90 MPa (13,000 psi). This is the inventive dispersion E.

A comparison dispersion was prepared using the following components:

| **Component** | Quantity |
|---|---|
| Magenta pigment | 50 g |
| Dispersant | 10 g |
| Water | 500 g |

The pigment was as in dispersion D. The dispersant was a styrene/acrylate copolymer as in example 1. The components were mixed using a square-hole high shear disintegrator in a Silverson stirrer for 1 hour at 7000 pm. The mixture was then passed through a Microfluidiser, Model M 110-F for 1 hour at 90 MPa (13,000 psi). The dispersion was then centrifuged for 20 min at 3000 rpm to remove oversize particles. This is dispersion F.

The particle size of the dispersions was measured as in example 1. The results are shown in Table 2.

**Table 2**

| **Dispersion** | Particle Size |
|---|---|
| Dispersion D comparative | 181 nm |
| Dispersion E invention | 141 nm |
| Dispersion F comparative | 164 nm |

The results show the particle size of the inventive dispersion E prepared using both the milling and dispersing steps is smaller than that of the comparison dispersions D and F prepared using these steps individually, even though the largest particles had been removed from comparative dispersion F by centrifugation.

### Example 3

A milling formulation was prepared with the following components:-

| **Component** | Quantity |
|---|---|
| Magenta pigment | 150 g |
| Dispersant | 22.5 g |
| Defoamer | 2.5 g |
| Anionic Surfactant | 10 g |
| Water to | 500 g |

The magenta pigment and dispersant were as in dispersion D. The defoamer was a commercial sample from Air Products under the trade name Surfynol DF75 and the surfactant a commercial sample from Clariant under the trade name Sandopan 2N. The pigment, dispersant, and water were mixed and milled as in example 1. A sample was retained as dispersion G.

The beads were separated and the mixture diluted to a pigment concentration of 10 % with water. A 100 g sample was then passed through a Microfluidiser, Model M 110-F for 10 minutes at 90 Mpa (13,000 psi). This is inventive dispersion H. The particle size of the dispersions was measured as in example 1. The results are shown in Table 3.

**Table 3**

| **Dispersion** | Particle Size |
|---|---|
| Dispersion G comparative | 178 nm |
| Dispersion H invention | 125 nm |

The results show that the inventive dispersion prepared using both the milling and dispersing steps has a smaller particle size than the dispersion prepared using just the milling stage.

An ink of pigment concentration 3.5% was made by diluting the inventive 10 % dispersion H according to the following formulation:

| **Component** | Quantity |
|---|---|
| Pigment dispersion | 17.5 g |
| Polyethylene glycol mw300 | 5 g |
| Diethylene glycol | 5 g |
| Deionised water | 22.5g |

The pH was adjusted to 9.0 using diethanolamine. The ink was loaded into an HP51626A ink cartridge and a test chart printed using a Hewlett-Packard 420C inkjet printer on to a sheet of plain white 80 gm⁻² paper. The ink printed successfully to give a good magenta print free of defects. The cartridge was then left for three days and another test chart printed. The second print was also successful with no evidence of blocked nozzles, showing that the inventive ink has good refire performance.

### Example 4

A milling formulation was prepared using a magenta pigment exactly as in example 2. It was mixed as in example 1. The milling chamber of an Eiger Torrance 'Mini' 250 Motormill MKII (Horizontal bead Mill) was charged with 180 ml of a YTZ milling medium comprising beads of diameter 0.3 mm - 0.4 mm to give a charge of 72 % by volume. The milling formulation was then passed through the mill and continuously processed for 50 minutes at 5000 rpm. A sample was retained as dispersion I. The beads were separated and the mixture diluted to a pigment concentration of 10 % with water. A 100 g sample was then passed through a Microfluidiser, Model M 110-F for 10 minutes at 90 MPa (13,000 psi). This is inventive dispersion J. The particle size of the dispersions was measured as in example 1. The results are shown in Table 4.

**Table 4**

| **Dispersion** | Particle Size |
|---|---|
| Dispersion I comparative | 170 nm |
| Dispersion J invention | 144 nm |

The results show that the inventive dispersion prepared using both the milling and dispersing steps has a smaller particle size than the dispersion prepared using just the milling stage.

## Claims

1. A process for the preparation of pigmented ink jet inks comprising:
(A) Providing a milling formulation comprising at least one pigment selected from C.I. Pigment Black 1; C.I. Pigment Yellow 1, 3, 12, 13, 14, 17, 24, 34, 35, 37, 53, 55, 74, 81, 83, 93, 95, 97, 98, 100, 101, 104, 108, 109, 110, 117, 128, 138, 151, 153, 154, 155, and 180; C.I. Pigment Orange 5, 13, 16, 17, 36, 43, and 71; C.I. Pigment Red 1, 2, 3, 9, 17, 22, 23, 31, 38, 48:1, 48:2, 48:3, 48:4, 49:1, 52:2, 53:1, 57:1, 60:1, 63:1, 63:2, 64:1, 81, 83, 88, 104, 105, 106, 112, 114, 122, 123, 146, 149, 166, 168, 170, 172, 177, 178, 179, 184, 188, 190, 193, 202, 209, and 219; C.I. Pigment Violet 1, 3, 5:1, 16, 19, 23, and 38; C.I. Pigment Blue 1, 2, 15:1, 15:2, 15:3, 15:4, 15:6, 16, 17:1, 56, 60, and 63; and C.I. Pigment Green 1, 4, 7, 8, 10, 17, 18, and 36; at least one dispersant, and an aqueous liquid carrier;
(B) milling this formulation in a bead mill or a triple roll mill in the presence of a milling medium;
(C) separating the milling medium;
(D) dispersing the mixture by passing it through a high pressure liquid homogeniser at a liquid pressure of at least 6.89 Mpa (1000 psi);
(E) diluting the mixture from step (D) to obtain an ink jet ink having a pigment concentration suitable for ink jet printers.

2. A process according to claim 1 wherein the aqueous liquid carrier is water.

3. A process according to claims 1 or 2 wherein the dispersant is a styrene acrylate copolymer **characterised by** an acid number between about 150 and about 250, a glass transition temperature between about 70° C and about 100°C, and a molecular weight between about 2000 and about 20000.

4. A process according to any of claims 1 - 3 wherein the milling formulation comprises between 10 % to 60 % by weight of pigment based on the total weight of the mixture.

5. A process according to any of claims 1 - 4 wherein the milling formulation comprises between 10 % and 100 % by weight of the dispersant based on the weight of the pigment.

6. A process according to any of claims 1 - 5 wherein the milling medium comprises ceramic beads.

7. A process according to claim 6 wherein the ceramic beads comprise Yttrium stabilised Zirconia beads of diameter between 0.1 mm and 1.0 mm.

8. A process according to any of claims 1 - 7 wherein the homogeniser used for step (D) comprises a high pressure impingement mill having a plurality of nozzles within a liquid jet interaction chamber.

9. A process according to any of claims 1 - 8 wherein the mixture is diluted in step (E) with a solvent comprising water and at least one water soluble organic solvent having at least two hydroxyl groups.

10. A process according to claim 9 wherein the water-soluble organic solvent is selected from diethylene glycol, triethylene glycol, polyethylene glycol, thiodiglycol, glycerol, 1,2-hexanediol, and 1,5-pentanediol.

11. A printing process effected by loading the ink prepared by the process of claim 1 in an ink jet printer, and applying the ink to a printing medium.

## Patentansprüche

1. Verfahren zur Herstellung von Pigmenttinten, umfassend:
(A) Die Bereitstellung eines Mahlgutes, welches mindestens ein Pigment, ausgewählt aus dem Schwarzpigment C.I. 1; den Gelbpigmenten C.I. 1, 3, 12, 13, 14, 17, 24, 34, 35, 37, 53, 55, 74, 81, 83, 93, 95, 97, 98, 100, 101, 104, 108, 109, 110, 117, 128, 138, 151, 153, 154, 155 und 180; den Orangepigmenten C.I. 5, 13, 16, 17, 36, 43 und 71; den Rotpigmenten C.I. 1, 2, 3, 9, 17, 22, 23, 31, 38, 48:1, 48:2, 48:3, 48:4, 49:1, 52:2, 53:1, 57:1, 60:1, 63:1, 63:2, 64:1, 81, 83, 88, 104, 105, 106, 112, 114, 122, 123, 146, 149, 166, 168, 170, 172, 177, 178, 179, 184, 188, 190, 193, 202, 209 und 219; den Violettpigmenten C.I. 1, 3, 5:1, 16, 19, 23 und 38; den Blaupigmenten C.I. 1, 2, 15:1, 15:2, 15:3, 15:4, 15:6, 16, 17:1, 56, 60 et 63 und den Grünpigmenten C.I. 1, 4, 7, 8, 10, 17, 18 und 36;
mindestens ein Dispergiermittel
und
ein wässriges Trägermedium enthält;
(B) die Mahlung dieser Zusammensetzung in einer Kugelmühle oder einer Dreiwalzenmühle in Gegenwart von Mahlkörpern; und
(C) die Abtrennung der Mahlkörper; und
(D) die Dispergierung dieser Mischung in einem Flüssighochdruckhomogenisator bei einem Druck von mindestens 6.89 MPa (1000 psi); und
(E) die Verdünnung der Mischung aus Schritt (D), um eine Aufzeichnungsflüssigkeit für den Tintenstrahldruck mit einer für den Tintenstrahldruck angepassten Pigmentkonzentration zu erhalten.

2. Verfahren gemäss Anspruch 1, **dadurch gekennzeichnet, dass** das wässrige Trägermedium Wasser ist.

3. Verfahren gemäss den Ansprüchen 1 und 2, worin das Dispergiermittel ein Copolymer aus Styrol und einem Acrylat ist, **dadurch gekennzeichnet, dass** seine Säurezahl zwischen ungefähr 150 und ungefähr 250, seine Glasübergangstemperatur zwischen ungefähr 70° C und ungefähr 100° C und sein Molekulargewicht zwischen ungefähr 2'000 und ungefähr 20'000 liegen.

4. Verfahren gemäss einem der Ansprüche 1 bis 3, **dadurch gekennzeichnet, dass** das Mahlgut zwischen 10 Gewichtsprozent und 60 Gewichtsprozent Pigment bezogen auf das Gesamtgewicht des Mahlguts enthält.

5. Verfahren gemäss einem der Ansprüche 1 bis 4, **dadurch gekennzeichnet, dass** das Mahlgut zwischen 10 Gewichtsprozent und 100 Gewichtsprozent Dispergiermittel bezogen auf das Gewicht des Pigments enthält.

6. Verfahren gemäss einem der Ansprüche 1 bis 5, **dadurch gekennzeichnet, dass** das Mahlgut Keramik-Kügelchen enthält.

7. Verfahren gemäss Anspruch 6, **dadurch gekennzeichnet, dass** die Keramik-Kügelchen mit Yttrium stabilisierte Zirkonoxid-Kügelchen mit einem Durchmesser zwischen 0.1 mm und 1.0 mm sind.

8. Verfahren gemäss einem der Ansprüche 1 bis 7, **dadurch gekennzeichnet, dass** der im Schritt (D) verwendete Homogenisator eine Hochdruckaufpralleinrichtung mit einer Vielzahl von Düsen innerhalb der Flüssigkeitswechselwirkungskammer enthält.

9. Verfahren gemäss einem der Ansprüche 1 bis 8, **dadurch gekennzeichnet, dass** die Mischung im Schritt (E) mit einem wasserlöslichen organischen Lösungsmittel verdünnt wird, welches mindestens zwei Hydroxylgruppen enthält.

10. Verfahren gemäss Anspruch 9, **dadurch gekennzeichnet, dass** das wasserlösliche organische Lösungsmittel aus Diethylenglykol, Polyethylenglykol, Thiodiglykol, Glycerin, 1,2-Hexandiol und 1,5-Pentandiol ausgewählt wird.

11. Druckverfahren, **dadurch gekennzeichnet, dass** die nach dem Verfahren von Anspruch 1 hergestellte Aufzeichnungsflüssigkeit in einen Tintenstrahldrucker eingebracht und damit auf ein Aufzeichnungsmaterial aufgebracht wird.

## Revendications

1. Procédé destiné à la préparation d'encres pigmentées comprenant:
(A) Mise à disposition d'un mélange à moudre comprenant au moins un pigment choisi parmi le pigment noir C.I. 1; les pigments jaunes C.I. 1, 3, 12, 13, 14, 17, 24, 34, 35, 37, 53, 55, 74, 81, 83, 93, 95, 97, 98, 100, 101, 104, 108, 109, 110, 117, 128, 138, 151, 153, 154, 155 et 180; les pigments oranges C.I. 5, 13, 16, 17, 36, 43 et 71; les pigments rouges C.I. 1, 2, 3, 9, 17, 22, 23, 31, 38, 48:1, 48:2, 48:3, 48:4, 49:1, 52:2, 53:1, 57:1, 60:1, 63:1, 63:2, 64:1, 81, 83, 88, 104, 105, 106, 112, 114, 122, 123, 146, 149, 166, 168, 170, 172, 177, 178, 179, 184, 188, 190, 193, 202, 209 et 219; les pigments violets C.I. 1, 3, 5:1, 16, 19, 23 et 38; les pigments bleus C.I. 1, 2, 15:1, 15:2, 15:3, 15:4, 15:6, 16, 17:1, 56, 60 et 63; et les pigments verts C.I. 1, 4, 7, 8, 10, 17, 18 et 36;
au moins un agent dispersant
et
un vecteur liquide aqueux.
(B) le broyage de cette formulation dans un broyeur à boulets ou un moulin à trois cylindres en présence d'un agent de mouture; et
(C) la séparation de l'agent de mouture; et
(D) la dispersion de ce mélange en le faisant passer dans un homogénéisateur de liquides à haute pression à une pression d'au moins 6.89 MPa (1000 psi); et
(E) la dilution du mélange de l'étape (D) afin d'obtenir une encre destinée à l'impression par jet d'encre ayant une concentration de pigment appropriée aux imprimantes à jet d'encre.

2. Procédé selon la revendication 1, **caractérisée par le fait que** le vecteur liquide aqueux est l'eau.

3. Procédé selon une des revendications 1 ou 2, dans lesquelles l'agent dispersant est un copolymère de styrène et d'acrylate **caractérisé par** un indice d'acidité situé entre environ 150 et environ 250, une température de transition vitreuse située entre environ 70° C et environ 100° C et une masse moléculaire située entre environ 2'000 et environ 20'000.

4. Procédé selon une des revendications 1 à 3, **caractérisée par le fait que** le mélange à moudre contient entre 10 % à 60 % pondéral de pigments par rapport à la masse totale du mélange.

5. Procédé selon une des revendications 1 à 4, **caractérisée par le fait que** le mélange à moudre contient entre 10 % et 100 % pondéral d'agent dispersant par rapport à la masse du pigment.

6. Procédé selon une des revendications 1 à 5, **caractérisée par le fait que** le mélange de mouture contient des boulets en céramique.

7. Procédé selon la revendication 6, **caractérisée par le fait que** les boulets en céramique sont des boulets d'oxyde de zirconium ayant un diamètre situé entre 0.1 mm et 0.8 mm et stabilisées par un ajout d'yttrium.

8. Procédé selon une des revendications 1 à 7, **caractérisée par le fait que** l'homogénéisateur utilisé dans l'étape (D) contient une unité de chocs à haute pression ayant une multitude de buses à l'intérieur d'une chambre d'interaction des liquides.

9. Procédé selon une des revendications 1 à 8, **caractérisée par le fait que** le mélange est dilué dans l'étape (E) par un solvant qui contient de l'eau et au moins un solvant organique soluble dans l'eau ayant au moins deux substituants hydroxyle.

10. Procédé selon la revendication 9, **caractérisée par le fait que** le solvant organique soluble dans l'eau est choisi parmi le diéthylène glycol, le triéthylène glycol, le polyéthylène glycol, le thiodiglycole, la glycérine, le 1,2-héxanediol, et le 1,5-péntanediol.

11. Procédé d'impression réalisé par le chargement de l'encre, préparée selon le procédé de la revendication 1, dans une imprimante à jet d'encre et la déposition de l'encre sur une feuille d'enregistrement.
